# EUROPÄISCHE PATENTANMELDUNG

(11) **EP 2 821 750 A1**
(43) Veröffentlichungstag der Anmeldung: **07.01.2015**
(21) Anmeldenummer: 13175115.8
(22) Anmeldetag: 04.07.2013
(51) Int. Cl.: G01C 15/00, G01C 21/20, G06K 9/00, G06F 17/30

(54) **Positionsbestimmungsverfahren für ein Vermessungsgerät und ebensolches Vermessungsgerät**

(71) Anmelder: Hexagon Technology Center GmbH, 9435 Heerbrugg (CH)
(72) Erfinder: Metzler, Bernhard, A-6850 Dornbirn (AT); Gächter Toya, Stefan Martin Benjamin, CH-9008 St. Gallen (CH)
(74) Vertreter: Gyaja, Christoph Benjamin

(57) **Zusammenfassung**

Verfahren zum Bestimmen der Positionsdaten (2) eines geodätischen Vermessungsgeräts (50) durch Abgleichen (3) einer aus den Daten eines Abbildes der Umgebung der Vermessungsgerätposition extrahierten Bezugsdatenmenge (22b, 35) mit positionsreferenzierten Datenmengen (4, 13, 14, 15, 22c), bestehend jeweils aus Daten korrespondierenden Typs, und Ermitteln der Positionsdaten (2) anhand von Positionsreferenz (5) derjenigen ausgewählten positionsreferenzierten Datenmenge (4, 13, 14, 15, 22c), die ein vergleichsweise bedeutendes Mass an Übereinstimmung mit der Bezugsdatenmenge (22b, 35) aufweist.

## Beschreibung

Die Erfindung betrifft ein Positionsbestimmungsverfahren für ein geodätisches Vermessungsgerät nach dem Oberbegriff des Anspruchs 1, ein ebensolches geodätisches Vermessungsgerät nach dem Oberbegriff des Anspruch 14 und ein ebensolches Computerprogrammprodukt.

Für die Aufnahme von Eigenschaften definierter Punkte in einer Messumgebung, insbesondere von Daten mit räumlichem Bezug, sind seit der Antike eine Vielzahl von Messverfahren bekannt. Als räumliche Standarddaten werden dabei die Position und Ausrichtung eines Vermessungsgerätes sowie Richtung, Entfernung und Winkel zu Messpunkten aufgenommen. Ein allgemein bekanntes Beispiel für solche Vermessungsgeräte bzw. geodätische Geräte stellt der Theodolit bzw. eine Totalstation dar. Solche Geräte verfügen über Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung noch mit einem äusseren Bezugssystem verknüpft werden, wozu i.d.R. die Position des Vermessungsgerätes im äusseren Bezugssystem als Grundlage dient.

Grundsätzlich können die Stationskoordinaten des Messgerätes als sogenannte freie Stationierung aus Messungen zu bereits absolut referenzierten Punkten berechnet werden. Dies können im Gelände vorhandene, ortsfeste und ausgezeichnete Punkte sein, bspw. Kirchturmspitzen oder speziell für geodätische Vermessungen installierte Objekte, z.B. Zielmarkierungen auf einer Baustelle. Für eine korrekte Positionsbestimmung müssen dabei die Messdaten jeweils den entsprechenden Referenzpunkten eindeutig zugeordnet werden. Eine derartige Referenzierung bei jeder einzelnen Punktmessung erfordert üblicherweise zumindest eine teilweise manuelle Durchführung, was zeitaufwändig und fehleranfällig ist.

Deshalb offenbart die EP 2142884.B1 ein Positionsbestimmungsverfahren, das sich von der bei der Messung einzuhaltenden notwendigen Verknüpfung von Punktidentifikation und Aufnahme der Messdaten löst. Die notwendige Zuordnung der vermessenen Punkte zu ihren entsprechenden Elementen der einen Referenzpunktmenge erfolgt hierzu, nach oder sukzessive während der Stationierungsmessung, über die relative Lage der Punkte untereinander. Der Ablauf ist von einem Vermessungsgerät mit automatischer Zielerkennungsfunktion automatisiert durchführbar. Nachteilig an diesem Verfahren ist, dass mehrere absolut referenzierte Punkte im Umfeld vorhanden und diese darüber hinaus anmessbar sein müssen. Diese müssen für eine Automatisierung darüber hinaus mit vom Vermessungsgerät anzielbaren Markierungen, z.B. retroreflektierende Prismen, versehen sein. Nachteilig ist zudem, dass für eine Positionsbestimmung entsprechend mehrere geodätische Vermessungen durchgeführt werden müssen, was i.d.R. fachmännische Kenntnisse und erhöhten Zeitaufwand erfordert. Ausserdem muss für eine Durchführung des in der EP 2142884.B1 offenbarten Positionsbestimmungsverfahrens die passende Referenzpunktmenge vorab ausgewählt worden sein, insofern also eine gewisse Vorkenntnis über den Standort vorliegen.

Die Position eines Vermessungsgerätes ist alternativ mittels einen am Vermessungsgerät angebrachten GNSS-Empfänger über einzelne Satelliten als Referenzpunkte bestimmbar. Nachteilig ist allerdings das geringere Auflösungsvermögen, insbesondere hinsichtlich der Höhenbestimmung, verglichen mit einer Referenzierung mittels geodätischer Vermessung. Zudem ist der Vorgang an den Empfang von GNSS-Signalen gebunden, der nicht überall gegeben ist.

Die Aufgabe der vorliegenden Erfindung besteht daher in der Bereitstellung eines alternativen und vereinfachten Positionsbestimmungsverfahrens für ein geodätisches Vermessungsgerät.

Eine weitere Aufgabe der vorliegenden Erfindung besteht darin, eine vollautomatisierte, rasch durchführbare Positionsbestimmung zu ermöglichen.

Eine weitere Aufgabe der vorliegenden Erfindung besteht darin, eine Positionsbestimmung ohne gezielte Messung zu oder von einzelnen Positionsreferenzen wie anzielbare Umgebungsmarkierungen oder GNSS-Satelliten zu ermöglichen.

Eine weitere Aufgabe der vorliegenden Erfindung besteht darin, eine Positionsbestimmung ohne Verwendung eines weiteren geodätischen Geräts und/oder ohne eine geodätische Vermessung und ohne Verwendung von positionsgebenden Signalen zu ermöglichen.

Eine weitere Aufgabe der vorliegenden Erfindung besteht in der vereinfachten visuellen Bereitstellung von Umgebungspunkten- oder abschnitten, die für eine geodätische Vermessung relevant sind.

Eine weitere Aufgabe der vorliegenden Erfindung besteht in der Bereitstellung eines geodätischen Vermessungsgeräts für ein solches Verfahren.

Diese Aufgaben werden erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung verfolgt zur Bestimmung der Position eines geodätischen Vermessungsgeräts einen neuartigen Ansatz. Der Bezug zu referenzierter Positionsinformation wird erfindungsgemäss nicht über einzelne positionsreferenzierte Umgebungspunkte, deren Position durch ein Empfangen von Positionssignalen, wie z.B. GNSS-Signalen, oder geodätisches Vermessen ermittelt wird, hergestellt, sondern über Charakteristiken der Stationierungsumgebung, die eine eindeutige Identifizierung des Vermessungsgerätstandorts erlauben. Dazu wird ein Abbild der Umgebung des gewählten Stationierungsorts über wenigstens einen zusammenhängenden Bereich aufgenommen, wobei insbesondere dabei aufgenommene Umgebungselemente, worunter Punkte oder Bereiche von Umgebungsoberflächen zu verstehen sind, den Bereich mit einer vorgegebenen Mindestdichte abdecken, um einen für die weiteren Verfahrensschritte ausreichend hohen Informationsgrad über die Standortumgebung zu erhalten. Das Abbild bzw. eine daraus extrahierte Datenmenge wird anschliessend abgeglichen mit, bspw. in einer Datenbank, hinterlegten Datenmengen einer Vielzahl von Abbildern von Umgebungen. Es wird dasjenige Abbild gesucht, das zum aufgenommenen Abbild gleichen Inhalt aufweist. Die hinterlegten Abbilder bzw. Datenmengen sind positionsreferenziert, d.h. es ist die absolute Position des jeweiligen Standorts bekannt oder ermittelbar, von dem aus sich das jeweilige hinterlegte Umgebungsabbild ergibt. Die Positionswerte sind mit hinterlegt oder abrufbar. Wird Übereinstimmung zwischen dem aufgenommenen Abbild und einem Datenbankabbild festgestellt, kann angenommen werden, dass beiden der gleiche Standort zugrundeliegt. Deshalb werden die Positionsdaten des Standorts des hinterlegten Abbilds auch dem noch unreferenzierten Aufnahmestandort des aufgenommenen Abbilds zugeordnet.

Die Koordinaten des aktuellen Positionierungsortes werden erfindungsgemäss also bestimmt durch Übernehmen von Positionsdaten eines bekannten Positionierungsortes, der wegen Gleichheit der Umgebungsansicht als mit dem aktuellen Ort identisch erkannt wird. Gleichheit bedeutet erfindungsgemäss hierbei, dass Datenmengen der eine Umgebungsansicht wiedergebenden Abbilder ein bedeutendes Mass an Übereinstimmung aufweisen, d.h. innerhalb bestimmter Toleranzgrenzen übereinstimmen. Als Grundlage dienen Abstands- und Ähnlichkeitsmasse wie Minkowski-Distanz, Bhattacharyya-Distanz, Kullback-Leibler Distanz oder allgemein eine Distanzmatrix aus verschiedenen Distanzmassen, usw.

Ein Abbild der Umgebung kann auf verschiedene Weise erzeugt werden. Erfindungsgemäss werden nicht gezielt einzelne Umgebungselemente aufgenommen. Der Aufnahmebereich wird stattdessen vollständig abgebildet, in dem Sinne, dass ein "flächendeckendes" Erfassen der Umgebung stattfindet, wobei die Deckungsgüte eine vorgegebene Untergrenze erreicht. Die Umgebungselemente sind erfindungsgemäss dabei willkürlich und ungezielt ausgewählt, in dem Sinne, dass die Auswahlkriterien nicht im Einzelnen von der Umgebung abhängen. Die Umgebungsdaten werden insofern vorkenntnislos erstellt. Bspw. erfolgt ein Anzielen von Umgebungselementen nur dahingehend, dass Winkelabstände zwischen den Einzelmessungen vorgegeben werden, wodurch ein Punkteraster entsteht und nicht dahingehend, dass gezielt markante Umgebungspunkte wie die Spitze eines Kirchturms oder die Ecken eines Quaders oder mit speziellen Markierungen versehene Umgebungselemente aufgenommen werden. Das maximale Auflösungsvermögen des Abbilds ist durch die technischen Möglichkeiten des Aufnahmemittels begrenzt. Dieses ist deshalb so zu wählen, dass die erreichbare Deckungsdichte der Umgebungselemente und damit die Informationsdichte über die Umgebung ausreicht, um durch das erfindungsgemässe Abgleichen mit den positionsreferenzierten Abbildern eine Übereinstimmung genügend sicher identifizieren zu können. Insbesondere eignet sich für das erfindungsgemässe Verfahren eine fotografische Aufnahme mittels einer Digitalkamera oder eine, bspw. durch einen Laserscan erstellte, dreidimensionale Aufnahme. Bei der Fotografie kann es sich um eine schwarz/weiss-Aufnahme handeln, eine Farbfotografie mit einer Farbtiefe von bspw. 24 Bit oder eine Aufnahme nur über einen bestimmten Spektralbereich. Die Mindestdichte, mit der die aufgenommenen Umgebungselemente den Aufnahmebereich abdecken, ist bei Verwendung einer Digitalkamera bspw. durch die Pixelanzahl des Bildsensors vorgegeben, die bspw. zwischen 0,5 Megapixel und 16 Megapixel, insbesondere zwischen 2 Megapixel und 8 Megapixel, beträgt, bei einer Bildsensorfläche von typischerweise 5,76mm auf 4,29mm. Bei Verwendung eines Laserscanners liegt die Mindestdichte bspw. bei einem Punktabstand zwischen 500mm und 0,5mm bei 10m Distanz zum Standort, insbesondere zwischen 100mm und 2mm bei 10m Distanz zum Standort, im Speziellen zwischen 50mm und 5mm bei 10m Distanz zum Standort. Entsprechend weist ein erfindungsgemässes geodätisches Vermessungsgerät, dessen Position zu bestimmen ist, wenigstens eine Digitalkamera auf oder eine Einheit zum Erstellen von Umgebungsabbildern mit Tiefeninformation, z.B. einen Laserscanner oder eine RIM-Kamera. Ein geodätisches Vermessungsgerät, das ein Scanmodul aufweist, wird bspw. in der EP 12153163, eingereicht am 30.1.2012 von der gleichen Anmelderin, beschrieben. Auch kann aus zweidimensionalen Kamerabildern mit leicht versetzter Aufnahmeausrichtung ein 3D-Bild bspw. mittels Semi-Global-Matching erstellt werden. Ein Abbild besteht dabei nicht notwendigerweise aus der Aufnahme von Texturen bzw. Oberflächen, sondern kann auch ausschliesslich aus miteinander in Bezug gesetzten, insbesondere geometrisch angeordneten, Entfernungsmessungen bestehen. Ein solches Range-Imaging liefert damit beispielsweise eine zweidimensionale Anordnung von Entfernungsmessungen und damit eine Art dreidimensionales Bild des erfassten Sichtfeldes. Die Messungen können jedoch auch einem texturerfassenden Bild zugeordnet sein. Beispielsweise können für jeden Bildpunkt Helligkeit und Entfernung aufgenommen werden, so dass für jede Bildinformation, die beispielsweise aus der Lage eines Bildpunktes besteht, eben diese Helligkeitswerte und Entfernungen verfügbar sind. Jedoch kann auch die Anordnung einer Entfernungsmessung relativ zu anderen Entfernungsmessungen erfolgen, so dass auch auf die Kenntnis der Lage eines jeden Bildpunktes hinsichtlich des Aufnahmeortes verzichtet werden kann. Hierdurch kann beispielsweise auf eine vollständige Auswertung des erfassten Sichtbereichs verzichtet werden, so dass sich z.B. mit Subwindowing oder Subframing höhere Verarbeitungsgeschwindigkeiten realisieren lassen.

Die Abbilder können einen unterschiedlichen Bereich der Umgebung wiedergeben. Erfindungsgemäss ist ein Erfassungsbereich ausreichend, wie er einer Einzelabbildaufnahme mit den technischen Möglichkeiten einer handelsüblichen Kamera entspricht, i.d.R. also ein Bildwinkel von ca. 47°. Prinzipiell kann das erfindungsgemässe Verfahren selbst mit deutlich kleineren Umgebungsbereichen durchgeführt werden. Solch relativ kleine Umgebungsausschnitte können bswp. bei Verwendung einer Digitalfotografie mit einem Bildwinkel von 12°, bei einem eindimensionalen Rundum-(360°)-Laserscan in nur einer, zumindest weitgehend, horizontalen Ebene, oder bei einer Aufnahme mit einem Bildwinkel von 1,5°, wie sie z.B. durch eine ATR-Kamera (Automatic Target Recognition) eines geodätischen Vermessungsgeräts angefertigt werden kann, entstehen. Je nach Umgebung, Abbildertyp und -detailgrad kann solch ein kleiner Umgebungsausschnitt genügen, um daraus abgleichsfähige Datenmengen zu erstellen, die eine ausreichend sichere Übereinstimmungsfeststellung ermöglichen. Idealerweise wird zur Steigerung der Robustheit einer Übereinstimmung ein grösserer Umgebungsbereich erfasst, bspw. ein Winkelbereich von wenigstens 70°, insbesondere zwischen 90° und 270°, im Speziellen von wenigstens 130°, in zumindest weitgehend, horizontaler Ausrichtung mit einem definierten vertikalen Öffnungswinkel, dessen Betrag z.B. im Wertebereich von 10° bis 270°, insbesondere zwischen 20° und 120°, im Speziellen zwischen 40° und 90°, liegt. Insbesondere kann erfindungsgemäss der ganze Umkreis des Stationierungsortes aufgenommen werden, also ein, ggf. mehrschrittiges, Aufnehmen eines Abbildes über einen Winkelbereich von 360° bei einem vertikalen Öffnungswinkel von bspw. 60°, wodurch ein Panoramabild erzeugt wird. Ein Abbild kann auch aus einer Kombination mehreren Bildern bestehen, die jeweils einen unterschiedlichen Umgebungsabschnitt darstellen. Bspw. können vier um 90° in horizontaler Richtung versetzte Aufnahmen mit einem Aufnahmebereich jeweils deutlich kleiner als 90°, z.B. 1,5°, als ein Abbild aufgefasst werden.

Hinterlegt sind Abbilder, die in geeigneter Weise Umgebungen wiedergeben und deren jeweiliger Aufnahmeort mit hinreichender Genauigkeit ebenfalls vorliegt, wobei es sich z.B. entsprechend dem aufgenommenen Abbild um Fotografien oder dreidimensionale Aufnahmen handeln kann. Gängige Bildverwaltungsprogramme und Dateiformate bieten bspw. die Möglichkeit einer Verknüpfung von fotografischem Bild und Aufnahmeort (engl.: "geotag"). Alternativ oder zusätzlich kann erfindungsgemäss auf georeferenzierte Daten zurückgegriffen werden, aus denen in irgendeiner Form zum aufgenommenen Bild adäquate positionsreferenzierte Umgebungsabbildern bzw. Datenmengen erstellbar sind, ggf. durch Zuweisen eines berechneten virtuellen bodennahen absolut referenzierten Aufnahmeorts. Als Grundlage können z.B. ein digitales Stadtmodell oder bodenentfernt aufgenommene Umgebungsabbilder wie bspw. Luftbilder dienen, insbesondere solche, die mittels Messstrahlung, z.B. Laserstrahlung, zusätzlich zu geographischen Daten bezüglich der Geländeebene Information über Geländererhebungen oder Objekthöhen beinhalten. Im Falle einer kleinräumigeren Vermessung kann erfindungsgemäss bswp. ein digitaler Bauplan als Basis für eine positionsreferenzierte Datenmenge dienen. So sind zu einem aufgenommenen eindimensionalen horizontalen Rundum-Laserscan aus einem Bauplan erstellte Umgebungsabbilder aus den angeordneten Gebäudegrundrissen adäquat und damit abgleichbar. Auch ist eine Kombination aus verschiedenen Datenquellen, bspw. einer digitalen Flurkarte und einem Luftbild dieser Umgebung, zu einem Abbild bzw. einem gemeinsamen Datensatz möglich.

Das Abgleichen des aufgenommenen Abbildes mit dem ortsreferenzierten Abbild vollzieht sich erfindungsgemäss über die diesen zugrunde liegenden oder daraus gebildeten Datenmengen. Um ein Abgleichen zu ermöglichen, müssen naturgemäss die Bezugsdatenmenge der Aufnahme und die jeweilige positionsreferenzierte Datenmenge Daten korrespondierenden Typs aufweisen, z.B. jeweils Farbwerte oder relative Helligkeitswerte von Pixeln und deren Koordinaten im Bild. Dieser Verfahrenschritt kann über die Datenmengen der gesamten Bildinhalte erfolgen. Vorzugsweise wird erfindungsgemäss jedoch zuvor eine Merkmalsextraktion durchgeführt, indem mittels Abbildverarbeiten zuvor spezifische Datenmengen aus den Abbildern abgeleitet werden, die anschliessend auf Übereinstimmung untersucht werden, ähnlich der Vorgehensweise des Content Based Image Retrieval (CBIR). Solche extrahierte Datenmengen können Daten einzelner Objekte oder herausgehobener Punkte oder Teilbereiche sein, z.B. dominante Linien, der Horizont in einem Panoramabild, Gebäudeeckpunkte oder geometrische Formen wie Bogensegmente oder Geraden, welche bspw. mittels Kantenextraktion oder Hough-Transformation ermittelt worden sind, u.ä. Ist das Abbild dreidimensional, sind die Objekte oder Punkte ebenfalls im Raum verteilt. Alternativ können diese auf eine, bspw. horizontale, Ebene projiziert werden. Verfahrensmässig genutzt werden Position und/oder Grösse im Abbild, die relativen Lagen zueinander, ein durch solche Punkte, Linien, Flächen oder Körper gebildetes flächiges oder dreidimensionales Muster, usw. Weitergehend kann dann z.B. basierend auf den Nachbarschaftsbeziehungen der detektierten geometrischen Primitive ein Topologiegraph des Abbildes aufgebaut werden, dessen Datenmenge zum Abgleichen benutzt wird. Erfindungsgemäss eignen sich alternativ oder darüber hinaus Merkmale zumindest teilweiser statistischer Natur, bspw. Farb- oder Grauwerthistogramme oder Histogramme von Flächennormalen, Helligkeitsgradienten, Textur-, Farb- oder Waveletsignaturen, aber auch Merkmale beschrieben durch Raumfarbwahrscheinlichkeitsfunktionen wie Farbkantenkookkurrenzdiagramme oder Farbkorrelogramme, usw. Diese können das ganze Abbild beschreiben oder lediglich Teilbereiche davon. Die Auswahl eines Abbildausschnitts kann dabei durch ein Fenster definierter Grösse erfolgen, welches sukzessive z.B. zeilenweise über das gesamte Bild geschoben bzw. gerastert wird (sliding window). Alternativ können Teilbereiche auch definiert werden durch das Umfeld markanter Strukturen oder Punkte, die z.B. mittels Förstner-Operator, Harris-Laplace-Detektor und/oder Harris-Ecken- und Kantendetektor extrahiert worden sind. Derartige Teilbereiche, d.h. die zugrunde liegenden Teildatensätze können dann wiederum als Grundlage für eine zu erstellende Datenmenge dienen. Das Abgleichen der Datenmengen und Identifizieren einer Übereinstimmung kann dann erfindungsgemäss bspw. über die Auswertung einer Korrelationsfunktion erfolgen. So kann die Kreuzkorrelationsfunktion von aus dem aufgenommenen Abbild erstellter Bezugsdatenmenge und einer jeweiligen hinterlegten positionsreferenzierten Datenmenge berechnet und ausgewertet werden. Erfindungsgemäss eignen sich zum Abgleichen insbesondere Deskriptoren, also Vektoren mit einer spezifischen Anzahl numerischer Werte, die Aspekte des Inhalts eines Abbilds oder eines Teilbereichs davon beschreiben, bspw. das Vorkommen bestimmter Strukturen, Texturen oder Farbverteilungen oder welche z.B. auf einem Histogramm von Gradienten (histogram of oriented gradients) oder Farbschattierungen basieren.Ein Deskriptor kann aus einer Kombination von verschiedenen geometrischen und statistischen Daten bestehen, die den Abbildinhalt eindeutig beschreiben. Dann kann ein zu einem solchen Merkmalsvektor des aufgenommenen Bildes unter Berücksichtigung eines gesetzten Schwellenwerts äquivalenter Deskriptor eines der Referenzabbilder gesucht werden, der eine Übereinstimmung indiziert. Zum Abgleichen kann eine Klassifizierung von Abbildmerkmalen, Deskriptoren oder von Abbildern als Gesamtheit durchgeführt werden, insbesondere unter Verwendung bestimmter Merkmalsvektoren. Eine Klassifizierung kann bspw. unter Heranziehung einer support vector machine (SVM) erfolgen. Übereinstimmung kann dann entsprechend anhand von Klassenzugehörigkeit bestimmt werden. Insbesondere kann ein Abgleichen über eine Kombination der verschiedenen Ansätze erfolgen.

Als übereinstimmend wird diejenige hinterlegte positionsreferenzierte Datenmenge, also dasjenige Abbild, angesehen, die innerhalb festgelegter Fehlergrenzen mit der aus dem aufgenommenen Abbild gewonnenen Bezugsdatenmenge identisch ist. Erfolgt das Abgleichen bspw. über Deskriptoren, werden zwei Umgebungsabbilder als übereinstimmend angenommen, wenn der Wert der Differenz zwischen deren beiden Merkmalsvektoren unter einem festgelegten Betrag liegt. Sollten mehrere Abbilder dieses Kriterium erfüllen, kann das mit der höchsten Übereinstimmungsgüte ausgewählt werden oder ein Abgleichen nur innerhalb dieser Gruppe anhand zusätzlicher Merkmale stattfinden.

Zur Erhöhung der Zuverlässigkeit können erfindungsgemäss Güteindikatoren für Berechnungsergebnisse erstellt werden. Ein solcher Güteindikator kann beispielsweise das Mass der Übereinstimmung von aufgenommenem Abbild und eines Abbilds aus der Datenbank oder die Unsicherheit, mit der eine Übereinstimmung behaftet ist, kennzeichnen, wodurch ggf. Korrekturmassnahmen durch den Benutzer oder automatisiert eingeleitet werden können. Entsprechend können bereits vor dem Abgleichen Qualitätsmerkmale für die Unsicherheit von abgeleiteten Datenmengen, bspw. von berechneten Punkten, erstellt und ggf. angezeigt und hinterlegt werden, oder auch der Fehler sonstiger Informationen indiziert werden.

Ist ein mit dem aufgenommenen Umgebungsabbild übereinstimmendes hinterlegtes Abbild ausgewählt worden, werden die Positionsdaten von dessen Aufnahmeort auch dem aktuellen Standort zugeordnet, da durch die vorherigen Verfahrensschritte angenommen werden kann, dass das Vermessungsgerät sich an diesem georeferenzierten Standort befindet. Gründen die hinterlegten Abbilder bspw. auf einem digitalen Stadtmodell, kann, statt schon vor dem Abgleichen für jedes hinterlegte Abbild einen fiktiven Aufnahmeort zu berechnen, lediglich für das ausgewählte Abbild ein solcher kalkuliert werden, wodurch sich ggf. Bearbeitungszeit einsparen lässt.

Eine anderweitige Beschleunigung der Positionsfindung kann in einer erfindungsgemässen Fortbildung des Positionsbestimmungsverfahrens dadurch erreicht werden, dass eine Vorinformation über eine grobe Position des geodätischen Vermessungsgeräts herangezogen wird, um, insbesondere automatisiert, aus der Vielzahl von georeferenzierten Abbildern von Umgebungen eine Vorauswahl dadurch zu treffen, dass nur solche Abbilder für das Abgleichen verwendet werden, die einen Bezug zu der Grobposition haben. Eine Vorkenntnis der Grobposition kann z.B. dadurch erhalten werden, dass über einen Mobilfunkempfänger des geodätischen Vermessungsgeräts seine Position auf den Bereich der Mobilfunkzelle eingegrenzt wird, in die der Mobilfunkempfänger eingeordnet ist. Dann werden diejenigen Umgebungsabbilder zum Abgleichen herangezogen, die zu einer dieser Mobilfunkzelle bzw. diesem Bereich zugeordneten Datenbank gehören.

Ein Vorteil des erfindungsgemässen Positionsbestimmungsverfahrens liegt in seiner einfachen Durchführbarkeit. An Vorarbeit ist nur das Aufstellen und ggf. Horizontieren des geödatischen Vermessungsgeräts zu leisten. Ausser dem erfindungsgemässen Vermessungsgerät sind keine weiteren Geräte erforderlich. Das erfindungsgemässe Verfahren erfordert z.B. im Gegensatz zu einem auf geodätischen Vermessungen basierendem Verfahren keine fachspezifischen Kenntnisse. Ein Benutzer kann zudem durch automatische Routinen bei einzelnen Schritten unterstützt werden.

Insbesondere bietet das erfindungsgemässe Verfahren den Vorteil, dass mit entsprechender Hard- und Software alle Schritte automatisiert und automatisch ablaufen können. Dazu ist ein erfindungsgemässes geodätisches Vermessungsgerät bspw. mit einer Kamera ausgestattet, die einen automatisiert gesteuerten Motor zur Drehung um eine horizontale Achse aufweist, um damit und mittels Bildaufnahme- und Bildverarbeitungsalgorithmen automatisch mehrere Umgebungsbilder fotografiert und daraus ein 360°-Bild der Umgebung zu erstellen. Das Abgleichen der Aufnahme mit den Abbildern aus der Datenbank und das Auffinden von Übereinstimmung sind mittels entsprechender Abbild- und Datenverarbeitungsalgorithmen aus dem Stand der Technik wie weiter oben beschrieben ohne Benutzereingriffe durchführbar. Insbesondere bietet das erfindungsgemässe Verfahren den Vorteil, dass geodätische Vermessungsgeräte des Stands der Technik keiner zusätzlichen Hardware bedürfen, da sowohl eine Kamera als auch ein Steuermotor bereits vorhanden sind. Somit entstehen in dieser Hinsicht keine zusätzlichen Herstellungskosten. Im Gegensatz dazu bedarf ein geodätisches Vermessungsgerät zur Standortbestimmung mittels GNSS eines GNSS-Empfänger, was zusätzliche Herstellungskosten generiert, abgesehen davon, dass ein GNSS-Empfang in oder nahe bei Gebäuden oftmals nicht gegeben ist.

Erfindungsgemäss lässt sich erforderlichenfalls die Positionsgenauigkeit erhöhen, in dem das Verfahren um eine geodätische Vermessung von mehreren, insbesondere von wenigstens drei, absolut referenzierten Zielpunkten nach dem Stand der Technik erweitert wird. Da nach den bisherigen Verfahrensschritten der Standort des Vermessungsgeräts bekannt ist, können aus einer Datenbank am Standort gelegene geodätische Zielpunkte bekannter absoluter Position abgerufen werden, was automatisiert durchführbar ist. Eine geodätische Vermessung mittels der Distanz- und Winkelmessfunktion des Vermessungsgeräts solcher, z.B. durch Ausstattung mit Retroreflektoren, anzielbarer Zielpunkte führt dann zu einer genaueren Positionsbestimmung mittels bekannter geometrischer Prinzipien, bspw. anhand des in der EP 2142884.B1 geoffenbarten Verfahrens. Hierzu können zur Auswahl durch den Benutzer dem Umgebungsabbild Punkte überlagert werden. Insbesondere kann alternativ eine solche Vermessung vollautomatisiert ausgeführt werden durch ein Vermessungsgerät mit automatischer Anzielfunktionalität, wie es z.B. in der EP 10168771.3 offenbart ist.

Ein, insbesondere automatisiertes, Abrufen aus einer Datenbank von am bestimmten Standort gelegenen geodätischen Zielpunkten kann in einer Fortbildung des erfindungsgemässen Verfahrens weiter dazu verwendet werden, zusätzlich zur Position auch eine, zumindest grobe, Orientierung des geodätischen Vermessungsgeräts zu ermitteln, also eine, zumindest grobe, vollumfängliche Verknüpfung des inneren Bezugssystems des Vermessungsgeräts mit dem absoluten Bezugssystem zu bestimmen. Aus der bekannten absoluten Lage eines oder mehrerer Zielpunkte und einer bekannten Ausrichtung des geodätischen Vermessungsgeräts relativ zu dem wenigstens einen Zielpunkt kann die absolute Orientierung des Vermessungsgeräts anhand von dem Fachmann bekannten Methoden bestimmt werden.

Erlaubt die absolute Positionsreferenz des positionsreferenzierten Abbilds, anhand dessen Übereinstimmung die Position des Vermessungsgeräts bestimmt ist, zusätzlich eine Ermittlung von absoluten Orientierungsdaten hinsichtlich einer tatsächlichen oder virtuellen Aufnahmerichtung, kann alternativ eine absolute Orientierung des geodätischen Vermessungsgeräts anhand eines Vergleichs dieser tatsächlichen oder virtuellen Aufnahmerichtung des hinterlegten Umgebungsabbildes mit der bekannten Aufnahmerichtung des aufgenommenen Umgebungsabbildes ermittelt werden. Dazu kann beispielsweise der "geotag" eines positionsreferenzierten Abbildes nicht nur den Aufnahmeort, sondern auch die Aufnahmerichtung beinhalten. Ist alternativ das positionsreferenzierte Abbild z.B. anhand eines digitalen Stadtmodells erstellt, kann diesem nicht nur ein virtueller, berechneter Aufnahmeort, sondern auch eine virtuelle, berechnete Aufnahmerichtung zugewiesen werden.

Das erfindungsgemässe Verfahren kann also mittels eines geodätischen Vermessungsgeräts mit motorisiertem Abbildaufnahmemitteln und entsprechender Steuer- und Auswertealgorithmen im Gesamten vollautomatisch ablaufen, was eine einfache und rasche Durchführung ermöglicht.

Abgesehen vom unmittelbaren Aufnehmen des Umgebungsabbildes, d.h. bspw. dem Fotografieren oder Scannen, bietet das erfindungsgemässe Verfahren weiterhin den Vorteil, dass Verfahrensschritte nicht an ein spezielles Gerät gebunden sind. Das Erstellen eines Abbildes aus den aufgenommenen Messdaten kann genauso wie die restlichen Verfahrensschritte, z.B. das Ableiten von Datenmengen und das Abgleichen mit Referenzabbildern, d.h. daraus resultierenden Referenzdatenmengen, durch das geodätische Vermessungsgerät als auch durch externe Geräte erfolgen, an die die Messdaten übermittelt wurden, bspw. einen Cloud-Server. Ebenso können die positionsreferenzierten Daten im Vermessungsgerät hinterlegt sein oder in einem weiteren Gerät wie einem mobilen Feld-Controller bereitstehen. Zum Beispiel kann aus den Messdaten durch das Vermessungsgerät eine auf den aktuellen Standort bezogenen Datenmenge erstellt, bspw. geometrische Strukturen extrahiert werden und diese Daten an ein handgehaltenes weiteres Gerät wie ein Smartphone gesendet werden, wo mittels dort eingespeicherter Algorithmen das Abgleichen anhand einer hinterlegten oder online abrufbaren Datenbank und Identifizieren des Standorts stattfindet. Anschliessend werden die Stationskoordinaten an das Vermessungsgerät transferiert.

Über die eigentliche Positionsbestimmung hinaus ist an diesem bildbezogenen Verfahren vorteilhaft, dass anschliessende geodätische Vermessungsvorgänge dadurch vereinfacht werden können. Zum Beispiel lassen sich erfindungsgemäss, nachdem der Standort bestimmt worden ist, in einem Umgebungsabbild aus einer Datenbank bereitgestellte besondere Umgebungspunkte markieren. Dies können z.B. bereits vermessene Zielpunkte sein. Das Umgebungsabbild kann das aufgenommene oder das übereinstimmende Abbild aus der Datenbank, oder ein Live-Bild der Umgebung, sein, falls das geodätische Gerät eine entsprechende Kamera aufweist. Die Kombination aus Umgebungsabbild und Zielpunkte lässt sich dann bspw. auf einem elektronischen Display darstellen, wodurch ein Benutzer erkennen kann, welche Zielpunkte in der Umgebung bereits vermessen sind und er gezielt noch unbestimmte Zielpunkte vermessen kann. Weiterhin lassen sich auf dem Umgebungsbild spezielle Objekte anzeigen, bspw. Gebäude, deren Abbildung aus einem digitalen Stadtmodell erzeugt wurde. Damit ist feststellbar, ob real vorhandene Objekte noch nicht digitalisiert im Modell vorliegen oder ob Veränderungen an bereits vorhandenen Objekten vorliegen und diese damit vermessungsrelevante sind.

Das erfindungsgemässe Verfahren bietet insbesondere Vorteile in einer über einen längeren Zeitraum zu vermessenden Umgebung, die sich fortwährend verändert, wodurch immer wieder neue Zielpunkte dazukommen. Dies ist z.B. der Fall auf einer Baustelle, auf der neue Gebäude entstehen. Es genügt dann, einmal Vermessungsgerätstandorte festzulegen, deren absolute Position, falls noch nicht vorliegend, einmalig mit einem anderweitigen Verfahren zu bestimmen und ein jeweiliges Abbild der Standortumgebung zu hinterlegen. Für Vermessungen an späteren Tagen, die an den gleichen Standorten stattfinden sollen, sind mit dem erfindungsgemässen Verfahren der jeweilige Standort und Zielpunkte, die noch nicht vermessen sind, weil durch Bautätigkeit neu hinzugekommen, einfach und unter geringem Zeitaufwand identifiziert.

Das erfindungsgemässe Positionsbestimmungsverfahren sowie das erfindungsgemässe geodätische Vermessungsgerät werden nachfolgend anhand von in der Zeichnung schematisch dargestellten Ausführungsbeispielen rein beispielhaft näher beschrieben.

Im Einzelnen zeigen
- Fig.1a-b: die Prinzipdarstellung des erfindungsgemässen Abgleichens von aufgenommenem Abbild und Referenzabbildern und der Zuordnung eine Position,
- Fig.2a-c: Beispiele für erfindungsgemässe Umgebungsabbilder,
- Fig.3a-c: Beispiele für erfindungsgemässe positionsreferenzierte Datenmengen,
- Fig.4a-c: Beispiele für erfindungsgemässe abgleichsfähige korrespondierende Datentypen,
- Fig.5a-b: ein Beispiel für ein erfindungsgemässes Abgleichen,
- Fig.6a-c: ein weiteres Beispiel für ein erfindungsgemässes Abgleichen,
- Fig.7: ein Beispiel für eine erfindungsgemässe Weiterverwendung eines Umgebungsabbildes für einen anschliessenden geodätischen Vermessungsvorgang,
- Fig.8: ein Beispiel für das erfindungsgemässe Aufnehmen eines Umgebungsabbildes mit einem erfindungsgemässen geodätischen Vermessungsgerät,

Fig.1a-b zeigen das Prinzip des erfindungsgemässen Abbildabgleichs und der daraus resultierenden Positionsbestimmung. Das Umgebungsabbild 1 in Fig. 1a ist am Standort P des geodätischen Vermessungsgeräts aufgenommen worden, so dass noch keine Positionsdaten 2 mit dem Umgebungsabbild verknüpft sind. Nun wird abgeglichen, also nach Übereinstimmung gesucht, 3, zwischen diesem Abbild und einer Anzahl von hinterlegten Abbildern bzw. deren entsprechenden Datenmengen 4 mit Daten korrespondierenden Typs einer Datenbank. Im Beispiel wird die Korrespondenz dadurch sichergestellt, dass es sich bei allen Abbildern um zweidimensionale, fotografisch aufgenommene Panoramabilder handelt. Die hinterlegten Bilder 4 sind positionsbestimmt, da die Positionsdaten 5 des jeweiligen Aufnahmestandorts, z.B. P6, bekannt und mit hinterlegt ist. Eine Positionsreferenzierung kann erfindungsgemäss auch dadurch gegeben sein, dass nicht dem Abbild insgesamt, also der Gesamtheit der das Abbild repräsentierenden Datenmenge, eine absolute Position zugeordnet ist, sondern wenigstens einem Element des dem hinterlegten Abbild zugrunde liegenden Datensatzes oder einer daraus erstellten Datenmenge eindeutig eine absolute Position zugeordnet ist. Dieses wenigstens eine Datenmengen- bzw. Datensatzelement kann der dem Umgebungsabbild entsprechenden Standort sein. Es kann aber auch jedes andere wenigstens eine Element sein, solange sich daraus die absoluten Standortkoordinaten berechnen lassen. So kann z.B. der Datensatz einer 3D-Punktwolke, die nicht durch einen bodennahen Scanvorgang generiert wurde und somit nicht direkt über einen dem aufgenommenen Abbild entsprechenden Aufnahmestandort verfügt, durch einige Punkte als Elemente der Datenmenge absolut referenziert sein, aus denen sich durch die bekannte relative Anordnung der Punkte die absolute Position eines virtuellen bodennahen Aufnahmestandorts extrahieren lässt. Im Beispiel werden der Reihe nach die einzelnen Referenzbilder mit dem aktuell aufgenommenen Bild verglichen, symbolisiert durch den Pfeil 6. Gleichwohl ist erfindungsgemäss das Abgleichen nicht an die Anordnung der Datenbankabbilder gebunden.

In Fig. 1b ist dargestellt, dass ein georeferenziertes Abbild 4 gefunden und ausgewählt ist, das ein bedeutendes Mass an Übereinstimmung aufweist, 7. Deshalb wird dessen Positionsinformation 5, im Beispiel P8, als Aufnahmeortposition und damit Vermessungsgerätposition übernommen, 8. Ein bedeutendes Mass an Übereinstimmung liegt vor, wenn die zum Abgleich herangezogenen Kriterien, bspw. relative Grösse und Position im Bild von einzelnen Objekten, innerhalb gewisser Toleranzwerte bei aufgenommenem und referenzierten Abbild identisch sind. Falls dies auf mehrere Datenbankbilder zutrifft, wird dasjenige als übereinstimmend ausgewählt, das unter allen die geringste Abweichung aufweist oder ein erneutes Abgleichen innerhalb dieser Vorauswahl nach zusätzlichen Kriterien durchgeführt.

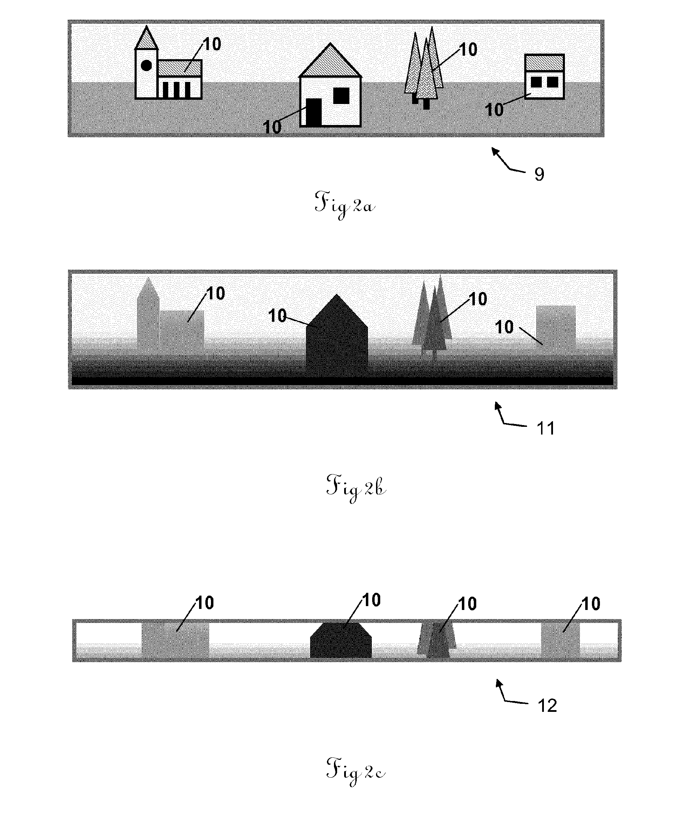

Fig. 2a zeigt ein erfindungsgemässes Beispiel für ein aufgenommenes Umgebungsabbild. Es handelt sich um ein Panoramabild 9, das einen Sichtbereich von 360° abdeckt.

Erstellt werden kann ein solches durch Zusammenfügen mehrerer einzelner Fotografien, aufgenommen in unterschiedliche horizontale Blickrichtungen von einer Digitalkamera, die das geodätische Vermessungsgerät aufweist. Durch entsprechende Motorisierung, insbesondere zum horizontalen Schwenken der Kamera, und entsprechende Steuer- bzw. Bildverarbeitungsprogramme kann dies automatisiert erfolgen. Im Beispiel sind einzelne Umgebungsobjekte 10, insbesondere Gebäude, schematisch dargestellt. Daten des Umgebungsabbildes 9 wie relative Position und Grösse von Objekten 10 sind Grundlage für die Bezugsdatenmenge, mit der der anschliessende Abbildabgleich vorgenommen wird. Bspw. kann die erforderliche Bezugsdatenmenge auch aus Daten bestehen, die das ganze Bild 9 oder Teilbereiche davon beschreiben, z.B. Farbhistogramme.

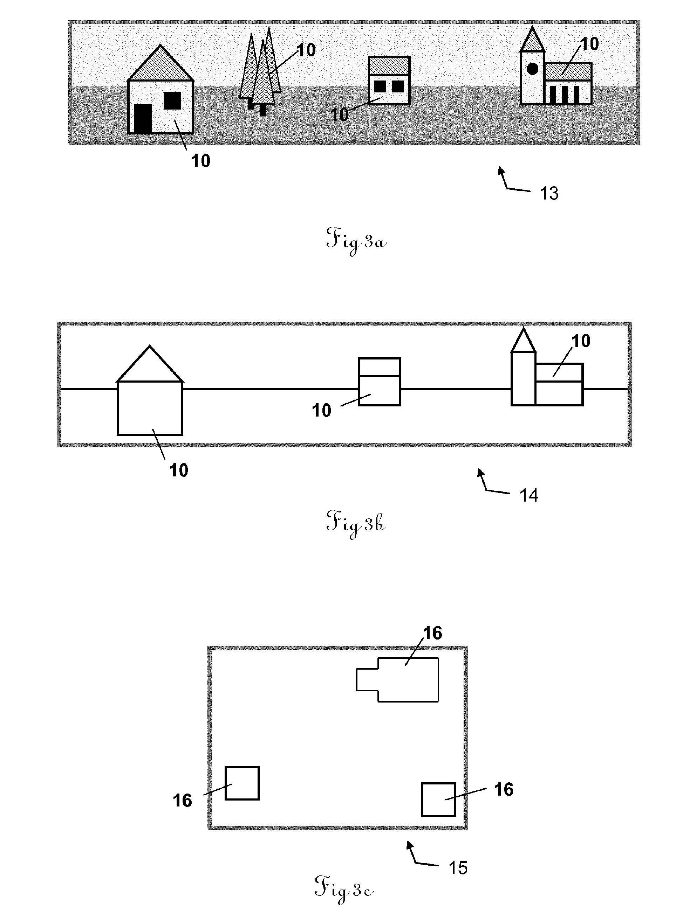

Fig. 2b zeigt als Beispiel für ein erfindungsgemässes Umgebungsabbild ein Range-Panorama-Image 11. Dies kann durch einen Laserscan erstellt worden sein. Alternativ kann ein Aufnehmen mit einer RIM-Kamera stattgefunden haben oder aus zwei vertikal leicht versetzt aufgenommenen Panoramabildern ein dreidimensionales Bild erzeugt worden sein. Der Sichtbereich und der Aufnahmestandort entsprechen denen aus Fig. 3a. Die unterschiedlichen Entfernungen zwischen Vermessungsgerät und Objekten 10 der Umgebung werden durch unterschiedliche Helligkeitswerte visualisiert. Im Beispiel bedeutet eine grössere Helligkeit eine grössere Distanz.

Fig. 2c zeigt ein dem Beispiel aus Fig. 2b entsprechendes Range-Panorama-Image 12 mit einem im Vergleich dazu geringeren vertikalen Umgebungsausschnitt, so dass nur Teile der Objekte 10 repräsentiert sind. Der Aufnahmebereich in horizontaler Richtung beträgt nach wie vor 360°, in vertikaler Richtung nur mehr bspw. 20°. Dies kann je nach Umgebungsstrukturierung und Abgleichmethode ausreichend sein. Durch den kleineren Erfassungswinkel ist die Aufnahmezeit im Vergleich zur Aufnahmezeit für das Bild aus Fig. 2b geringer und durch die kleinere anfallende Datenmenge ergeben sich kürzere Verarbeitungszeiten.

Fig. 3a zeigt ein Beispiel für eine erfindungsgemässe hinterlegte georeferenzierte Datenmenge. Hierbei handelt es sich um eine Datenmenge, die ein Panoramabild 13 bildet, das auf gleiche Weise wie jenes aus Fig. 2a entstanden ist und ebenfalls einen vollständigen Umgebungsumkreis innerhalb eines bestimmten vertikalen Sichtbereichs abdeckt. Die Anordnung der Objekte 10 im Bild ist im Vergleich zum aufgenommenen Bild aus Fig. 3a unterschiedlich. Da die Bilddaten aber ansonsten identisch sind, werden durch ein objektbezogenes Abgleichen die beiden Bilddatenmengen als gleich erkannt und dem aufgenommenen Bild die Positionsdaten des hinterlegten Bilds 13 zugeordnet. Die unterschiedliche Anordnung weist nicht auf unterschiedliche Aufnahmeorte hin, sondern lediglich auf eine unterschiedliche azimutale Nullorientierung bei den jeweiligen Aufnahmen am gleichen Standort, was für eine Positionsbestimmung keine Rolle spielt.

Fig. 3b zeigt als weiteres Beispiel für ein erfindungsgemässes Referenzabbild ein virtuelles Panoramabild 14, das aus den in einem digitalen Stadtmodell erfassten Informationen berechnet worden ist. Die Objekte 10 sind Gebäude, deren Grösse, Form und Anordnung aus den Modelldaten für einen bestimmten virtuellen Aufnahmestandort kalkuliert sind. Ein derartiges künstliches Abbild 14 lässt sich für viele Positionen im in Frage kommenden

Umgebungsbereich, bspw. eines Strassenzugs, berechnen, z.B. regelmässig angeordnet in einem Abstand von jeweils 100 Metern zueinander, so dass für ein Netz aus möglichen passenden Standorten abgleichbare Abbilder vorliegen. Die Position, die dem am besten übereinstimmenden virtuellen Abbild zugrunde liegt, wird dann dem aufgenommenen Abbild zugeordnet, also als Standort des Vermessungsgeräts übernommen. Zeigt sich eine gewisse Übereinstimmung mit mehreren positionsreferenzierten Datenmengen oder ist nach einer ersten groben Positionsbestimmung eine genauere Standortermittlung erwünscht, können die vorherigen Schritte mit einem feineren Netz aus virtuellen Aufnahmeorten, bspw. mit einem Abstand von 10 Metern, um den bestimmten Positionsbereich wiederholt werden. Alternativ oder zusätzlich kann bei Vorhandensein eines entsprechend detaillierten digitalen Stadtmodells auch der Detailgrad eines jeden künstlichen Abbilds 14 und damit der Datenmengen erhöht werden, in dem z.B. Fassadenbestandteile der Gebäude wie Fenster oder Türen mit berücksichtigt werden.

Fig. 3c stellt ein weiteres Beispiel dar für eine erfindungsgemässe positionsrefenzierte Datenmenge. Diese ist als positionsreferenzierte Abbild 15 manifestiert, in dem die Grundrisse 16 von Gebäuden nachgebildet werden. Erhalten oder erzeugt werden kann ein solches aus Satelliten- oder Luftaufnahmen, digitalen Stadtmodellen, Flurkarten, Bauplänen u.ä. Grundlage können erfindungsgemäss auch dreidimensionale Abbilder sein, die mittels Lidar, Ladar oder Radar (Light bzw. Laser bzw. Radio detection and ranging) erstellt sind. Im Gegensatz zu den vorherigen Beispielen stellt es die Umgebung aus einer Aufsicht und nicht aus einer Seitenansicht dar. Zum Abgleichen mit daraus gewonnenen positionsreferenzierten

Datenmengen eignet sich deshalb eine Bezugsdatenmenge, die aus einem Umgebungsabbild mit Entfernungsinformation generiert ist, bspw. basierend auf einer laserbasierten Messung in einer horizontalen Ebene.

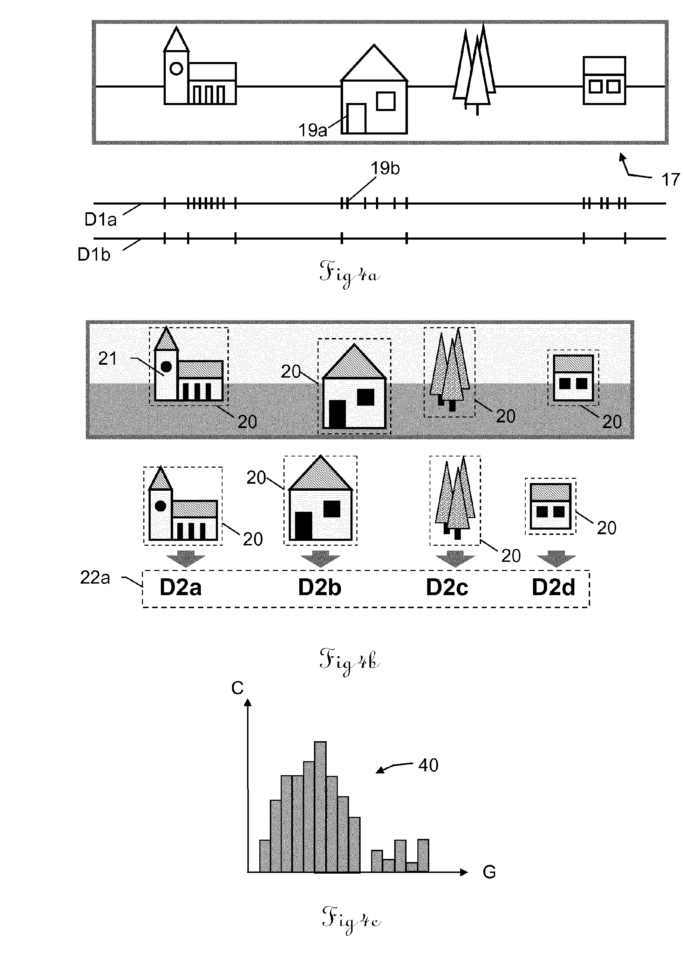

Fig. 4a ist ein erstes Beispiel für einen abgleichsfähigen Datentyp. Die korrespondierenden Daten der aus dem aufgenommenen Abbild 17 erstellten Bezugsdatenmenge und einer positionsreferenzierten Datenmenge sind in diesem Fall Deskriptoren D1a und D1b, die auf dominanten vertikalen Linien eines Panoramabildes basieren. Hierzu wird zuerst aus dem Panoramabild ein Kantenbild erstellt, in dem auf dieses ein Sobel-, Prewitt-, Laplaceoperator o.ä. angewendet wird. Dieses wird auf dominante vertikalen Linien untersucht, wobei eine Linie als dominant betrachtet wird, falls sie eine festgesetzte Mindestlänge aufweist oder überschreitet. Als erstes Beispiel ist in Fig. 4a schematisch ein Deskriptor D1a dargestellt, der auf vertikalen Linien mit einer kleinen Untergrenze, z.B. 50 Pixel, basiert. Bezeichnet ist zur Veranschaulichung eine vertikale Linien 19a, die mindestens diese Länge aufweist, wodurch sie Bestandteil 19b im Deskriptor D1a ist. Diese ergibt sich aus der linken Kante der Tür des Hauses im Vordergrund. Ein zweites Beispiel ist eine schematische Darstellung für einen Deskriptor D1b für eine grössere Mindestlänge relevanter vertikaler Linien, bspw. von 200 Pixel. Als übereinstimmend werden nun zwei Deskriptoren angenommen, die, innerhalb gewisser Toleranzen, die gleiche Verteilung dominanter Linien aufweisen. Eine Verwendung von auf die feinere Einteilung basierenden Deskriptoren ist dann z.B. sinnvoll, wenn ein Abgleichen mit den auf einer relativ grossen Mindestlänge basierenden Deskriptoren mehrere möglicherweise übereinstimmende Datenmengen ergibt.

Fig. 4b zeigt ein weiteres Beispiel für Daten korrespondierenden Typs. In diesem Fall beziehen sich diese nicht auf das Abbild insgesamt, sondern auf Teilbereiche (sub-windows) 20. Diese Teilabbilder 20 beinhalten bestimmte Merkmale. Im Beispiel sind dies besondere Strukturen, die einzelne Gebäude und Landschaftsmerkmale repräsentieren, z.B. das Kirchengebäude 21. Solche Strukturen lassen sich bspw. mit Merkmalserkennungsalgorithmen herausarbeiten (interest point detection). Anschliessend wird für jede einzelne Struktur, z.B. das Kirchengebäude 21, jeweils ein Deskriptor D2a-D2d erstellt. Die Gesamtheit aller Deskriptoren bildet dann als Deskriptorensatz 22a die zum Abgleichen verwendete Datenmenge.

Fig. 4c ist ein drittes Beispiel für Daten korrespondierenden Typs, anhand derer das Abgleichen stattfindet. Im Beispiel handelt es sich um ein Grauwerthistogramm 40. Die Anzahl C der Pixel mit einem bestimmten Grauwert G ist gegen den jeweiligen Grauwert aufgetragen. Das Histogramm 40 ist aus einer schwarz/weiss-Fotografie mit einer Grauwerttiefe von 4 Bit extrahiert, weswegen es lediglich 16 Intensitätslevel gibt. Um einen ausreichend hohen Informationsgrad über die Standortumgebung zu erreichen, ist erfindungsgemäss eine grössere Grauwerttiefe, bspw. im Bereich von 8 Bit bis 64 Bit, insbesondere von wenigstens 16 Bit, bevorzugt. Ein Abgleichen erfolgt anhand der jeweiligen Daten des Histogramms des Umgebungsabbildes und der positionsreferenzierten Abbilder indem die Häufigkeiten einzelner Grauwerte oder die Grauwertverteilungen insgesamt verglichen werden.

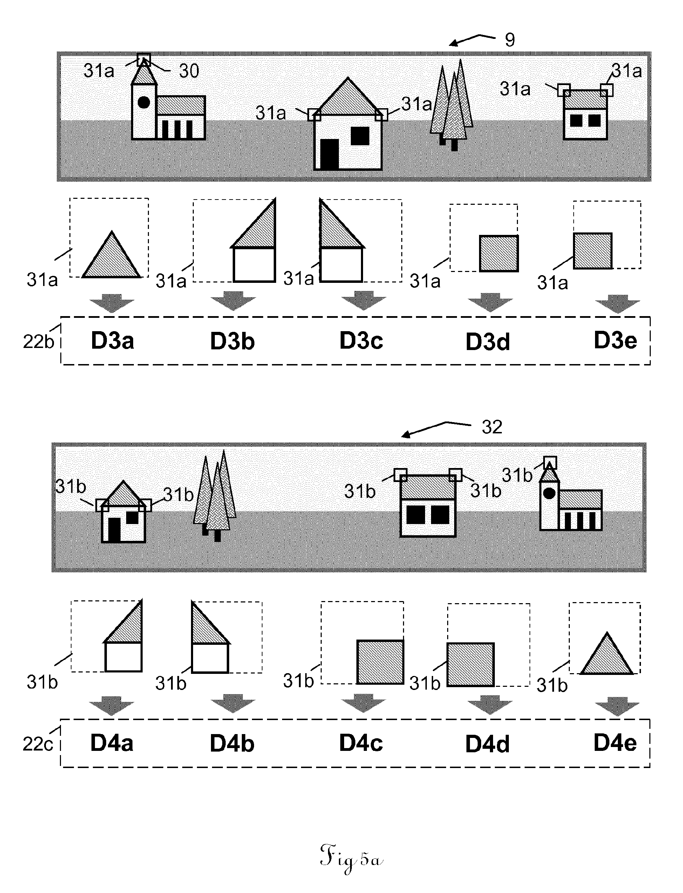

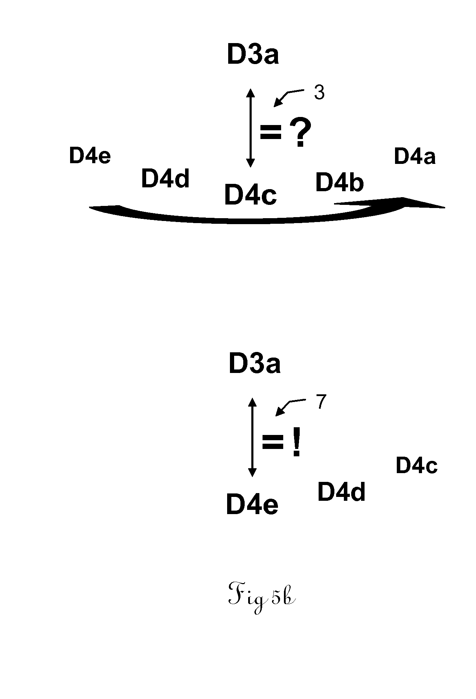

Fig. 5a und 5b stellen ein Beispiel für erfindungsgemässe abgleichsfähige Daten und deren erfindungsgemässem Abgleichen dar. In Fig. 5a werden in einem ersten Schritt aus einem Umgebungsabbild markante Strukturen herausgefiltert. Hierbei handelt es sich um spezielle Gebäudeecken und -kanten, bspw. die Kirchturmspitze 30. Somit können im Bild markante Strukturen lokalisiert werden. Durch deren Umgebungen wird im Beispiel wiederum jeweils ein bestimmter Bildausschnitt 31a, 31b definiert, auf dessen Basis ein jeweiliger Deskriptor berechnet wird. Für das aufgenommene Umgebungsabbild 9 ergibt sich als Bezugsdatenmenge ein erster Deskriptorensatz 22b aus den Deskriptoren D3a - D3e. Für eine hinterlegte positionsreferenzierte Datenmenge, die sich als positionsreferenziertes Abbild 32 darstellen lässt, ergibt sich im Beispiel ein zweiter Deskriptorensatz 22c aus den Deskriptoren D4a - D4e.

Fig. 5b stellt das anschliessende Abgleichen durch Vergleichen der Bezugsdatenmenge mit den einzelnen hinterlegten Datenmengen dar. Statt die Mengen insgesamt abzugleichen, kann erfindungsgemäss alternativ eine Datenmenge als Ansammlung der Unterdatenmengen, jeweils bestehend aus den Daten eines einzelnen Deskriptors, angesehen werden und die Unterdatenmengen untereinander verglichen werden. So wird z.B. der Deskriptor D3a des Datensatzes 22b mit allen Deskriptoren des Datensatzes 22c eines georeferenzierten Abbilds verglichen, also nach Äquivalenten zu einzelnen lokalen Strukturen des aufgenommenen Abbilds gesucht, 3. Anstelle eines "direkten" Datenvergleichs kann ein Abgleichen auch über Klassifizierung von Datenmengen erfolgen. Dazu können bspw. einzelne Deskriptoren in Klassen eingeteilt werden, z.B. die Klasse "Kirchturmdachspitze", oder eine Klassifizierung einzelner abgebildeter Objekte ("Kirchturm") oder mehrerer Objekte bzw. des gesamten Abbilds ("Häuser") z.B. anhand mehrerer Deskriptoren stattfinden. Eine solche Vorgehensweise ist bspw. durch eine Klassifizierung anhand der Methode der "bag-of-features" realisierbar.

Im Beispiel sind die Deskriptoren grösseninvariant gestaltet, z.B. durch Berechnung mittels SURF- oder SIFT-Algorithmen, weshalb eine Übereinstimmung auch gefunden wird trotz unterschiedlicher Skalierung. So erscheint im aufgenommenen Abbild 9 die Spitze des Kirchturmdaches 30 grösser als im hinterlegten Abbild 32. Die entsprechenden skaleninvarianten Deskriptoren D3a bzw. D4e werden jedoch als gleich erkannt, 7.

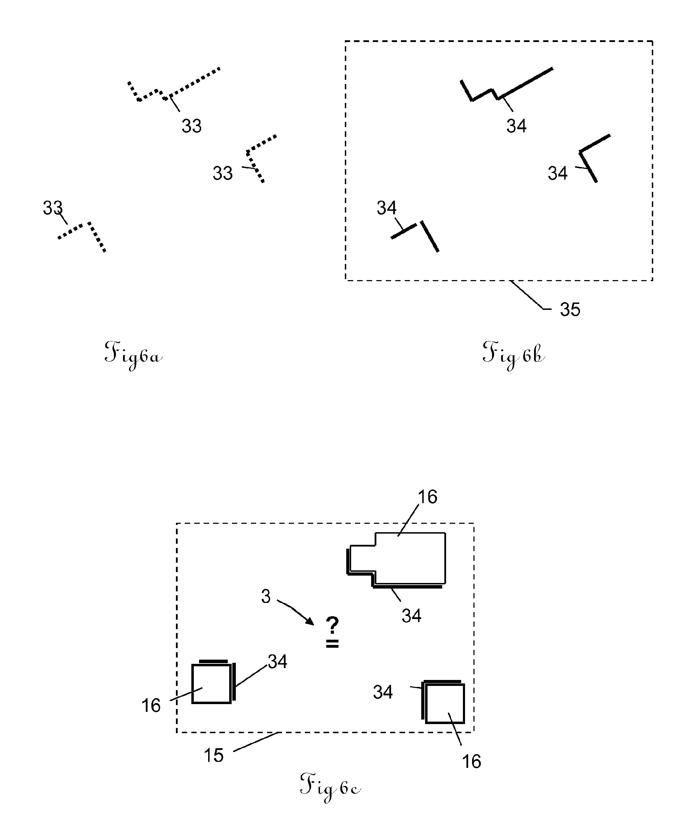

Fig. 6a bis 6c stellen ein weiteres Beispiel für erfindungsgemässe abgleichsfähige Daten und deren erfindungsgemässem Abgleichen dar. Als Grundlage dient ein dreidimensionales Umgebungsabbild, z.B. ein Range Image.

In Fig. 6a sind aus der entsprechenden 3D-Punktwolke diejenigen Punkte 33 mittels Abbildverarbeiten herausgefiltert, die dem Vermessungsgerät zugewandten Teile von Gebäudegrundrissen entsprechen. Ggf. können aus den vorhandenen Daten durch Punktprojektion auf die Bodenebene auch entsprechende Punkte erstellt werden.

In Fig. 6b ist dargestellt, wie im nächsten Schritt zu zusammengehörigen Punkten geometrische Strukturen gefittet werden, im Beispiel Strecken oder Streckenzüge 34, die in ihrer Gesamtheit eine erfindungsgemässe Bezugsdatenmenge 35 bilden. Bei anderweitigen Punktmengen können ausgezeichnete Punkte oder geometrische Formen wie Kreisbögen oder sonstige gekrümmte Linien oder eine Kombination davon erstellt werden. Eine derartige erfindungsgemässe Bezugsdatenmenge 35 eignet sich vorzugsweise zum Abgleich mit positionsreferenzierten Datenmengen 15, die als Daten korrespondierenden Typs Gebäudegrundrisse 16 repräsentieren Eine derartige Datenmenge 15 lässt sich erfindungsgemäss erstellen aus Umgebungsabbildern, die auf geographischen Geländeplänen oder -modellen basieren, wie digitale Stadtmodelle, Baupläne, Flurkarten, oder aus Umgebungsabbildern, die aus bodenentfernt aufgenommenen Daten erzeugt sind, bspw. digitale oder digitalisierte Luft- oder Satellitenaufnahmen, wie sie u.a. im Internet verfügbar sind (siehe auch Fig. 3c).

Nun erfolgt das Abgleichen 3 der georeferenzierten Datenmengen aus den Daten zu den Gebäudegrundrissen entweder mit der Bezugsdatenmenge aus den gefilterten Punkten 33 oder, wie in Fig. 6c skizziert, aus den daraus gefitteten geometrischen Formen 34. Das Abgleichen 3 ist bspw. eine iterative Optimierung, bei der ein bedeutendes Mass an Übereinstimmung vorliegt, wenn eine minimal geforderte Gleichheitsgüte erreicht werden kann. Für das erfindungsgemässe Verfahren eignet sich hierbei z.B. der ICP-Algorithmus (Iterative Closest Point).

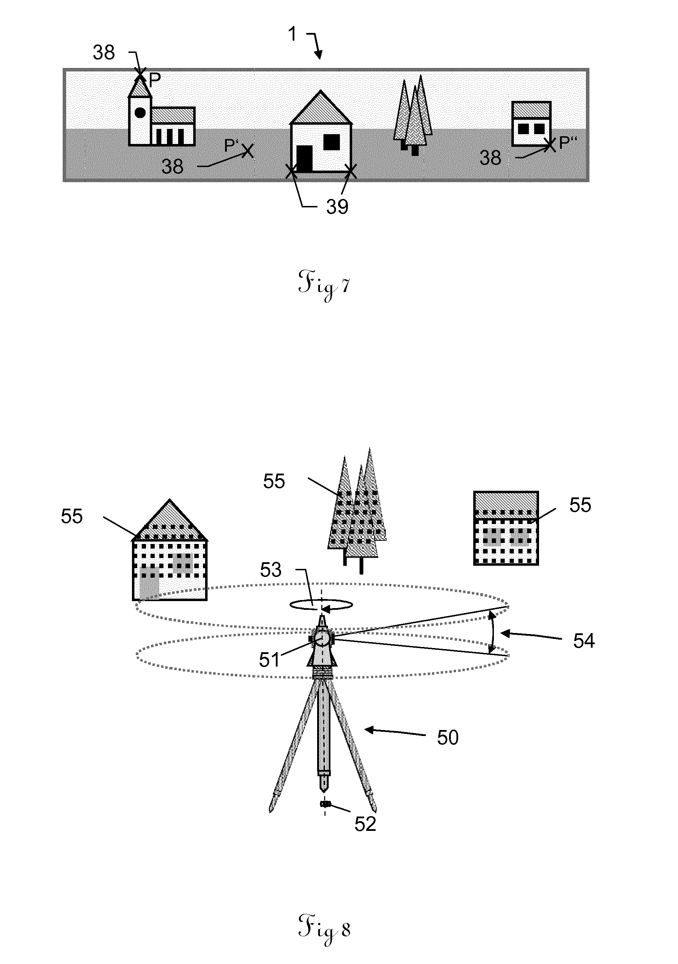

Fig. 7 zeigt ein Beispiel für eine erfindungsgemässe Weiterverwendung eines Umgebungsabbildes für eine nachfolgende Auswahl geodätisch zu vermessender Umgebungspunkte. Nachdem der Standort des Vermessungsgeräts identifiziert worden ist, also seine absolute Position bekannt ist, werden aus einer Datenbank Umgebungspunkte herausgefiltert, deren absolute Position bereits bekannt ist. Diese Datenbank kann bspw. durch vorhergehende geodätische Vermessungen in der gleichen Umgebung entstanden sein. Erfindungsgemäss werden diese Punkte in einem Umgebungsabbild markiert. Im Beispiel werden die Punkte 38 dem Umgebungsabbild 1 überlagert, wobei es sich dabei auch um das übereinstimmende hinterlegte Abbild handeln kann. Weist das erfindungsgemässe geodätische Vermessungsgerät eine Kamera auf, können die Punkte auch einem Live-Bild der Umgebung überlagert werden. Durch ein Anzeigen auf einem elektronischen Display kann nun der Benutzer erkennen, welche für eine geodätische Vermessung relevanten Geländepunkte noch nicht positionsbestimmt sind. Im Beispiel sind dies markante Punkte 39 des Hauses im Vordergrund. Dadurch lässt sich auf einfache Weise rasch erkennen, welche Zielpunkte für die aktuelle Vermessungsaufgabe in Frage kommen. Vorteilhaft ist dieses Verfahren z.B. falls eine Vermessungsaufgabe an einem Standort vormals nicht zu Ende geführt werden konnte. Diese kann dann erfindungsgemäss auf einfache und schnelle Weise fortgesetzt werden.

Fig. 8 zeigt ein Beispiel für den Verfahrenschritt einer erfindungsgemässen Umgebungsabbildakquisition mit einem erfindungsgemässen geodätischen Vermessungsgerät. Dazu wird das geodätische Vermessungsgerät 50, das eine Einheit 51 zum Erstellen eines Umgebungsabbildes aufweist, am gewählten Standort 52 positioniert. Zusätzlich kann eine Horizontierung vorgenommen werden. Dies ist jedoch für das erfindungsgemässe Verfahren keine notwendige Voraussetzung. Eine grobe horizontale Ausrichtung, wie sie durch einfaches Aufstellen i.d.R. gegeben ist, ist prinzipiell ausreichend, wenngleich für einige der möglichen Abgleichsmethoden eine genauere Horizontierung sinnvoll ist. Eine solche kann durch Neigungssensoren und motorisierte Stellmittel des Vermessungsgerätes 50 oder der Abbilderstellungseinheit 51 ohne Benutzereingriffe erfolgen. Anschliessend erfolgt erfindungsgemäss das Aufnehmen eines Umgebungsabbildes. Im Beispiel ist die Abbilderstellungseinheit 51 als Laserscanner ausgeprägt, der mittels Motorisierung automatisiert einen 360°-Scan in horizontaler Richtung 53 mit einem definierten vertikalen Erfassungswinkelbereich 54, bspw. von 40°, durchführt. Dabei werden der Abstand und die Richtung relativ zum Vermessungsgerät 50 von Umgebungselementen 55, im Beispiel von Punkten von Objektoberflächen, die sich im Umgebungsbereich befinden, z.B. einer Hauswand oder Bereiche der Bodenfläche, erfasst. Aus den Messdaten entsteht durch eine geräteinterne Auswerteeinheit eine 3D-Punktwolke, die sich als ein Range-Panorama-Image darstellen lässt, also als ein Panoramabild mit Tiefeninformation, welches dem Benutzer auf einem Display des erfindungsgemässen Vermessungsgeräts 50 angezeigt werden kann. Alternativ dazu können die Messdatenverarbeitung und das Anzeigen auch auf einem externen Gerät, bspw. einem Laptop, stattfinden, mit dem das Vermessungsgerät 50 eine Kommunikationsverbindung hat.

## Patentansprüche

1. Verfahren zum Bestimmen der Positionsdaten (2) eines geodätischen Vermessungsgeräts (50) durch
• Aufnehmen eines Umgebungsabbildes (1, 9, 11, 12) mindestens eines zusammenhängenden Bereichs der Umgebung der zu bestimmenden Vermessungsgerätposition (52),
• Bereitstellen einer Vielzahl hinterlegter positionsreferenzierter Datenmengen (4, 13, 14, 15, 22c) aus positionsreferenzierten Datensätzen heraus,
• Extrahieren einer Bezugsdatenmenge (22b, 35) bestehend aus abgelesenen oder abgeleiteten Daten des einen Umgebungsabbildes (1, 9, 11, 12) mittels Abbildverarbeiten, wobei jede positionsreferenzierte Datenmenge (4 ,13, 14, 15, 22c) und die Bezugsdatenmenge (22b, 35) Daten korrespondierenden Typs (D1a, D1b, D2a - D2d, D3a - D3e, D4a - D4e, 40) aufweisen,
• Abgleichen (3) der Bezugsdatenmenge (22b, 35) mit den bereitgestellten positionsreferenzierten Datenmengen (4, 13, 14, 15, 22c) mit Identifizieren von Übereinstimmungen zwischen Bezugsdatenmenge (22b, 35) und jeweils einer einzelnen positionsreferenzierten Datenmenge (4, 13, 14, 15, 22c),
• Auswählen (7) derjenigen positionsreferenzierten Datenmenge (4, 13, 14, 15, 22c), die ein vergleichsweise bedeutendes Mass an Übereinstimmung mit der Bezugsdatenmenge (22b, 35) aufweist,
• Ermitteln (8) der Positionsdaten (2) der Vermessungsgerätposition (52) anhand von Positionsreferenz (5) der ausgewählten positionsreferenzierten Datenmenge (4, 13, 14, 15, 22c).

2. Positionsbestimmungsverfahren nach Anspruch 1,
**dadurch gekennzeichnet, dass**
das Aufnehmen eines Umgebungsabbildes durch Fotografieren oder Laserscannen erfolgt, insbesondere wobei dabei aufgenommene Umgebungselemente (55) den wenigstens einen zusammenhängenden Bereich der Umgebung mit einer vorgegebenen Mindestdichte abdecken.

3. Positionsbestimmungsverfahren nach Anspruch 1 oder 2, **dadurch gekennzeichnet, dass**
eine positionsreferenzierte Datenmenge (4, 13, 14, 15, 22c) bereitgestellt wird durch Verwendung der Gesamtheit oder eines Teils eines digitalen positionsreferenzierten Datensatzes oder aus der Gesamtheit oder einem Teil erstellter Daten eines digitalen positionsreferenzierten Datensatzes
• eines, insbesondere durch Fotografieren oder Laserscannen erzeugten, bodennah aufgenommenen Umgebungsabbilds,
• eines geographischen Geländeplans oder -modells, insbesondere einer Flurkarte, eines Bauplanes oder eines digitalen Stadtmodells, oder
• eines aus bodenentfernt aufgenommenen Daten erzeugten Umgebungsabbildes, insbesondere eines, insbesondere dreidimensionalen, im Speziellen mittels Light-, Laser- oder Radio-Detection and Ranging erzeugten, Luft- oder Satellitenbildes,
insbesondere wobei aus einem digitalen Datensatz mehrere positionsreferenzierte Datenmengen (4, 13, 14, 15, 22c) erstellt werden, die sich jeweils für einen unterschiedlichen virtuellen bodennahen Aufnahmestandort eines aus dem Datensatz erstellten Umgebungsabbildes ergeben, insbesondere wobei die virtuellen bodennahen Aufnahmestandorte, insbesondere welche regelmässigen Abstand zueinander haben, innerhalb eines bestimmten Geländebereiches liegen.

4. Positionsbestimmungsverfahren nach einem der vorangehenden Ansprüche,
**dadurch gekennzeichnet, dass**
eine positionsreferenzierte Datenmenge (4, 13, 14, 15, 22c) dadurch positionsreferenziert ist, dass wenigstens einem, insbesondere allen, Datenmengenelement oder der Gesamtheit der Datenmengenelemente eindeutig eine absolute Position zugeordnet ist oder anhand wenigstens einer Positionsreferenz des zugrunde liegenden positionsreferenzierten Datensatzes zugeordnet werden kann.

5. Positionsbestimmungsverfahren nach einem der vorangehenden Ansprüche,
**dadurch gekennzeichnet, dass**
Daten korrespondierenden Typs (D1a, D1b, D2a - D2d, D3a - D3e, D4a - D4e, 40) Daten sind, die das gesamte Umgebungsabbild (1, 9, 11, 12) bzw. den digitalen Datensatz oder wenigstens einen Teilbereich (20, 31a, 31b) und/oder Aspekt oder Eigenschaft des jeweiligen gesamten Umgebungsabbilds (1, 9, 11, 12) bzw. des jeweiligen gesamten digitalen Datensatzes beschreiben, insbesondere
• Daten, insbesondere relative Positionsdaten, erfasster oder berechneter Punkte oder Strukturen, insbesondere geometrischer Primitiven,
• Daten statistischer Art, insbesondere Signaturen, Histogramme, im Speziellen Farb- oder Grauwerthistogramme oder Histogramme von Flächennormalen, Gradienten oder Funktionen, Helligkeitsgradienten oder Wahrscheinlichkeitsfunktionen,
• Deskriptoren, insbesondere translations-, rotations-, beleuchtungs- und/oder skaleninvariante, geometrische, farb- und/oder intensitätsbasierte und/oder statistische Deskriptoren, bspw. Histogram of Oriented Gradients (HoG), Histogram of Local Biniary Patterns (LBP), und Structure Tensor,
insbesondere wobei ein Teilbereich (20, 31a, 31b) als das Umfeld markanter Strukturen oder Punkte definiert ist oder durch Abbildrasterung, insbesondere mittels eines sliding-window-Prozesses, ermittelt wird.

6. Positionsbestimmungsverfahren nach einem der vorherigen Ansprüche,
**dadurch gekennzeichnet, dass**
das Abgleichen (3) stattfindet mittels Klassifizierung, insbesondere unter Verwendung einer support vector machine (SVM), Bilden wenigstens eines Abstandsmasses oder einer Korrelationsfunktion.

7. Positionsbestimmungsverfahren nach einem der vorangehenden Ansprüche,
**dadurch gekennzeichnet, dass**
das Ermitteln (8) der Vermessungsgerätposition (52) ein Übernehmen der absoluten Positionsdaten eines der ausgewählten positionsreferenzierten Datenmenge (4, 13, 14, 15, 22c) zugehörigen realen oder berechneten Aufnahmestandorts ist und/oder ein Ermitteln einer, zumindest groben, Vermessungsgerätorientierung anhand von referenzierten Orientierungsdaten der ausgewählten positionsreferenzierten Datenmenge erfolgt, insbesondere durch ein Vergleichen von Aufnahmerichtungen des aufgenommenen Umgebungsabbildes und der ausgewählten positionsreferenzierten Datenmenge.

8. Positionsbestimmungsverfahren nach einem der vorangehenden Ansprüche,
**dadurch gekennzeichnet, dass**
das Aufnehmen bezogen auf eine, insbesondere absolut horizontale, Aufnahmerichtung, über einen Winkel von wenigstens 1.5°, insbesondere wenigstens 45°, im Speziellen zumindest annähernd 360° erfolgt, insbesondere wodurch als Umgebungsabbild (1, 9, 11, 12) ein Panoramabild, ein 360°-3D-Scan oder ein Range-Panorama-Image erzeugt wird.

9. Positionsbestimmungsverfahren nach einem der vorangehenden Ansprüche,
**gekennzeichnet durch**
das Erstellen mindestens eines Güteindikators für wenigstens ein Berechnungsergebnis, insbesondere für das Mass an Übereinstimmung, welcher insbesondere auf einem elektronischen Display dem Benutzer angezeigt wird.

10. Positionsbestimmungsverfahren nach einem der vorangehenden Ansprüche,
**gekennzeichnet durch**
Bestimmen einer Vermessungsgerätpositionsvorinformation, insbesondere mittels Ermitteln der Mobilfunkzelle, in der sich das geodätische Vermessungsgerät befindet, und Auswählen von positionsreferenzierten Datensätzen anhand der Vermessungsgerätpositionsvorinformation und/oder ein verfeinertes Bestimmen der ermittelten Positionsdaten (2) anhand mehrerer, insbesondere wenigstens dreier, geodätischer Referenzpunkte in der Umgebung, welche nach Ermitteln der Positionsdaten, insbesondere automatisch, aus einer den ermittelten Positionsdaten (2) zugeordneten Datenbank ermittelt und anschliessend, insbesondere automatisiert, geodätisch vermessen sind.

11. Positionsbestimmungsverfahren nach einem der vorangehenden Ansprüche,
**gekennzeichnet durch**
ein Transferieren der Daten des Umgebungsabbildes (1, 9, 11, 12) nach dem Aufnehmen und vermessungsgerätexternes Vollziehen der weiteren Verfahrensschritte, insbesondere auf einem Smart-Phone oder **durch** Cloud-Services.

12. Positionsbestimmungsverfahren nach einem der vorangehenden Ansprüche,
**gekennzeichnet durch**
ein Markieren von automatisch aus einer der ermittelten Position zugeordneten Datenbank ermittelter ausgezeichneter Punkte (38, 39) und/oder Objekte in einem Abbild der Umgebung der zu Vermessungsgerätposition, insbesondere bereits vermessener Zielpunkte und/oder Zielobjekte in der Umgebung, insbesondere mit einem Visualisieren der Punkte (38, 39) und/oder Objekte und des Umgebungsabbildes auf einem elektronischen Display.

13. Positionsbestimmungsverfahren nach einem der vorangehenden Ansprüche,
**gekennzeichnet durch**
ein automatisiertes, insbesondere auch automatisches, Vollziehen einzelner, insbesondere aller, Verfahrensschritte.

14. Geodätisches Vermessungsgerät (50) mit
• einem auf einer Basis angeordneten, um eine Schwenkachse schwenkbaren Aufbau,
• einer Anzieleinheit, wobei die Anzieleinheit wenigstens eine eine optische Zielachse definierende Emissionseinheit zur Emission eines Laserstrahls und eine Entfernungsmessfunktionalität zur Messung einer Entfernung zu einem Objekt aufweist,
• einer Winkelmessfunktionalität zur hochpräzisen Erfassung zumindest eines durch eine relative Schwenkposition des Aufbaus zur Basis definierten Schwenkwinkels und
• einer Steuer- und Auswerteeinheit,
• einer Einheit zum Erstellen eines Umgebungsabbildes (51), insbesondere einer Digitalkamera, einer RIM-Kamera oder einem Scanmodul,
**dadurch gekennzeichnet, dass**
• die Steuer- und Auswerteeinheit derart ausgebildet ist, dass damit das Verfahren nach einem der Ansprüche 1 bis 13 ausführbar ist.

15. Computerprogrammprodukt, das auf einem maschinenlesbaren Träger gespeichert ist, oder Computer-Datensignal, verkörpert durch eine elektromagnetische Welle, mit Programmcode, der geeignet ist, aus einem aufgenommenen Abbild der Umgebung eines geodätischen Vermessungsgeräts (50) nach dem Verfahren nach einem der Ansprüche 1 bis 13 die absoluten Positionsdaten (2) des Vermessungsgeräts (50) zu bestimmen.
